Europäisches Patentamt

European Patent Office

Office européen des brevets

(19)

(11) Veröffentlichungsnummer: **0 235 342**
**A1**

(12) **EUROPÄISCHE PATENTANMELDUNG**

(21) Anmeldenummer: 86103732.3

(22) Anmeldetag: 19.03.86

(51) Int. Cl.⁴: **B23B 51/00**

(30) Priorität: 04.02.86 DE 8602801 U

(43) Veröffentlichungstag der Anmeldung:
09.09.87 Patentblatt 87/37

(84) Benannte Vertragsstaaten:
AT CH DE FR GB IT LI NL SE

(71) Anmelder: **Breznik, Andrej**
**Gerbergasse 32**
**A-9501 Villach(AT)**

(72) Erfinder: **Breznik, Andrej**
**Gerbergasse 32**
**A-9501 Villach(AT)**

(74) Vertreter: **Huss, Carl-Hans, Dipl.-Ing.**
**Patentanwalt Griesstrasse 3 a Postfach 14 54**
**D-8100 Garmisch-Partenkirchen(DE)**

(54) **Bohrwerkzeug.**

(57) Die Erfindung richtet sich auf ein Bohrwerkzeug, insbesondere für die Herstellung von Sacklöchern mit ebenem Boden, das gegenüber den Sacklöcher mit ebenem Boden erzeugenden bekannten Zentrumbohrern wesentlich einfacher in der Herstellung und Handhabung ist.

Hierzu schlägt die Erfindung ein rechteckiges Schneidblatt 1 einer dem Bohrlochdurchmesser entsprechenden Breite 14 vor, das an einer der kleineren Seiten zwei horizontal entgegengesetzt gerichtete, durch eine Zentrierspitze 3 getrennte Schneiden 2,2' und an der gegenüberliegenden Seite eine Ausnehmung 4 aufweist, die mit einer Halterung 5 zusammenwirkt, die in einem Schlitz 7 das Schneidblatt lösbar aufnimmt. Dabei kann das Schneidblatt ein Zuschnitt eines Stahlblechs sein und die Halterung aus einem handelsüblichen Sechskantprofil bestehen.

FIG. 1

FIG. 3

## Bohrwerkzeug

Die Erfindung richtet sich auf ein Bohrwerkzeug, insbesondere für die Herstellung von Sacklöchern mit ebenem Boden. Wenn also mit dem erfindungsgemäßen Bohrwerkzeug ein Werkstück nicht ganz durchgebohrt wird, so entsteht im Gegensatz zum Bohren mit einem Wendelbohrer eine ebene Grundfläche. Damit ähneln die gebohrten Sacklöcher am ehesten solchen, die mit Zentrumbohrern erzeugt wurden, jedoch sind die Bohrwerkzeuge nach der Erfindung wesentlich einfacher in Herstellung und Handhabung.

Die Erfindung ist in der Zeichnung an einem, keinen Anspruch auf Vollständigkeit erhebenden Beispiel dargestellt und anhand dieses nachfolgend beschrieben. Es stellen dar:

Fig. 1 ein Schneidblatt eines erfindungsgemäßen Bohrwerkzeuges in der Ansicht und in natürlichem Maßstab;

Fig. 2 eine Schneidblatthalterung im Maßstab der Fig. 1 und in Vorderansicht;

Fig. 3 ein aus den Teilen nach den Fig. 1 und 2 zusammengesetzes Bohrwerkzeug in einer um 90° gegenüber Fig. 2 gedrehten Ansicht.

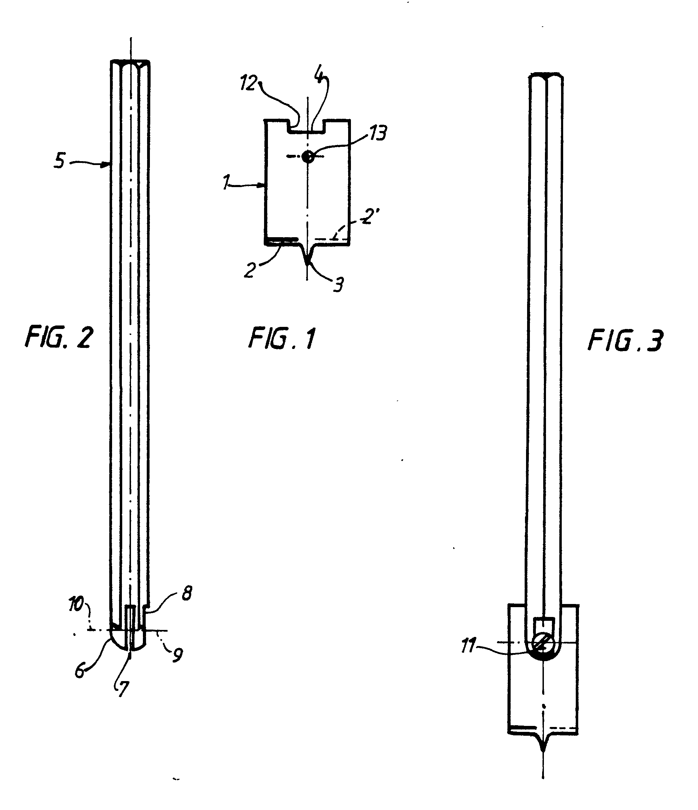

In Fig. 1 ist allgemein mit 1 ein Schneidblatt dargestellt, das aus einem etwa 1 bis 2 mm dicken Stahlblech als rechteckiger Zuschnitt durch Ausstanzen oder Ablängen, beispielsweise im sog. "Folgeschnitt", aus einem Band entsprechender Breite gefertigt sein kann.

Auf der einen kleineren Seite weist das Schneidblatt zwei entgegengesetzt gerichtete Schneiden 2,2' mit einem Schneidwinkel von etwa 15° auf. Zwischen den beiden Schneiden liegt eine Zentrierspitze 3. Auf der den Schneiden 2,2' gegenüberliegenden Seite ist mittig eine zweckmäßig rechteckige Ausnehmung 4 vorgesehen.

Zum Bohrwerkzeug gehört ferner eine allgemein mit 5 bezeichnete Halterung gemäß Fig. 2, die bei dem dargestellten Beispiel aus einem im Handel befindlichen Sechskantstahl besteht. Sie kann an der Unterseite 6 abgerundet sein und weist, von dieser Seite ausgehend, einen Schlitz 7 auf, dessen Weite mit geringem Übermaß auf die Dicke des Schneidblattes 1 abgestimmt ist. Außerdem ist parallel zum Schlitz 7 eine Abflachung 8 vorgesehen, von der eine den Schlitz durchsetzende Bohrung 9 ausgeht, deren einer Teil 10 als Gewindebohrung ausgebildet ist. Schlitz 7, Abflachung 8 und Bohrung 9,10 dienen dem Festziehen eines Schneidblattes 1 mit einer Halteschraube 11 gemäß Fig. 3. Zu dem gleichen Zweck genügt es unter Umständen, anstatt einer durchgehenden Bohrung 9,10 nur eine von der Abflachung 8 aus zum Schlitz 7 reichende Gewindebohrung vorzusehen, um das Schneidblatt 1 im Schlitz 7 mittels der Schraube 11 festzuklemmen.

Zur Befestigung des Schneidblattes 1 in der Halterung 5 wird also das Blatt mit seiner Ausnehmung 4 so in den Schlitz 7 von unten eingeschoben, daß sich die Seitenflächen 12 der Ausnehmung an der Außenfläche der Halterung 5 anlegen, wodurch ein Kippen des Schneidblattes 1 verhindert wird. Danach wird die Halteschraube 11 durch die Bohrung 9 in der Halterung 5 und die Bohrung 13 im Schneidblatt gesteckt und im Gewindeteil 10 der Bohrung festgezogen. Der zentrische Sitz des Schneidblattes ohne Kippgefahr läßt sich natürlich auch in anderer Weise verwirklichen, z.B. dadurch, daß die Ausnehmung 4 als länglicher schmaler, bis zur Bohrung 13 oder darüber hinausreichender Schlitz ausgebildet ist und über oder unter der Schraube 11 ein sich im Schlitz führender Stift in den Schlitz 7 hineinreicht.

Die Halterung 5 kann dann als Handhabe dienen, also für den Bohrvorgang mit der Hand gedreht werden oder in das Bohrfutter einer Bohrmaschine festgeklemmt werden.

Die Breite 14 des Schneidblattes 1 ist das Maß für den gewünschten Bohrlochdurchmesser.

Das Bohrwerkzeug nach der Erfindung ist besonders einfach herzustellen, weil es aus Zuschnitten eines Stahlblechs und aus einem im Handel befindlichen Profil für die Halterung herzustellen ist. Es ist insbesondere auch für die Herstellung von Sacklöchern mit ebener Bodenfläche gut brauchbar. Es eignet sich insbesondere auch dafür, als Werkzeug-Set in den Handel gebracht zu werden, d.h., man kann mit einer Halterung 5 mehrere auswechselbare Schneidblätter 1 verschiedener Breite aber gleicher Dicke verwenden, wenn die Breiten der Ausnehmungen 4 gleich sind.

## Ansprüche

1. Bohrwerkzeug, insbesondere für die Herstellung von Sacklöchern mit ebenem Boden, **gekennzeichnet** durch ein rechteckiges Schneidblatt (1) einer dem Bohrlochdurchmesser entsprechenden Breite (14), das an einer der kleineren Seiten zwei horizontal entgegengesetzt gerichtete, durch eine Zentrierspitze (3) getrennte Schneiden (2,2') und an der gegenüberliegenden Seite eine Ausnehmung (4) aufweist, die mit einer Halterung (5) zusammenwirkt, die in einem Schlitz (7) lösbar das Schneidblatt aufnimmt.

2. Bohrwerkzeug nach dem Anspruch 1, dadurch **gekennzeichnet,** daß die Ausnehmung - (4) rechteckig ist und ihre Seitenkanten (12) sich gegen Außenflächen der Halterung (5) anlegen.

3. Bohrwerkzeug nach dem Anspruch 1, dadurch **gekennzeichnet,** daß die Halterung (5) an einem Ende den Schlitz (7) und parallel zu diesem eine Abflachung (8) aufweist, von der eine Bohrung (9) für eine Befestigungsschraube (11) ausgeht.

4. Bohrwerkzeug nach dem Anspruch 3, dadurch **gekennzeichnet,** daß das Schneidblatt - (1) eine Bohrung (13) aufweist, die mit der Bohrung (9) der Halterung (5) zusammenwirkt, und daß die die Bohrung (9) fortsetzende Bohrung (10) auf der anderen Seite des Schlitzes (7) eine Gewindebohrung ist.

5. Bohrwerkzeug nach dem Anspruch 1, dadurch **gekennzeichnet,** daß das Schneidblatt - (1) ein Zuschnitt eines Stahlblechs ist.

6. Bohrwerkzeug nach dem Anspruch 1, dadurch **gekennzeichnet,** daß die Halterung (5) aus einem handelsüblichen Sechskantprofil besteht.

0 235 342

FIG. 2

FIG. 1

FIG. 3

BREZNIK          GEZ. IGL      AM  3.2.. 1986              A.Z.  T 61

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| X | GB-A-2 132 923 (CUTTER & TOOLS)<br>* Ansprüche 1-5, 9-11; Seite 1, Zeilen 78-96, 123-127; Figuren 2, 3 * | 1-5 | B 23 B 51/00 |
| | --- | | |
| X | DE-U-8 520 642 (WEBER)<br>* Seiten 3, 4; Figuren 1-4 * | 1-3 | |
| | --- | | |
| A | US-A-2 692 627 (STEARNS)<br>* Spalte 3, Zeilen 7-49; Figur 1 * | 1,4,5 | |
| | --- | | |
| A | US-A-2 794 468 (HUXTABLE)<br>* Spalte 1, Zeilen 35-39; Figuren 4, 5 * | 1,5,6 | |
| | --- | | **RECHERCHIERTE SACHGEBIETE (Int. Cl.4)** |
| A | US-A-4 066 379 (PROHASKA)<br>* Spalte 2, Zeile 66 - Spalte 3, Zeile 5; Figur 1 * | 1,5,6 | B 23 B 51/00<br>B 27 G 15/00 |
| | --- | | |
| A | GB-A-2 130 935 (VANGUARD FIXINGS)<br>* Anspruch 5 * | 6 | |
| | ----- | | |

Der vorliegende Recherchenbericht wurde für alle Patentansprüche erstellt.

| Recherchenort<br>BERLIN | Abschlußdatum der Recherche<br>10-05-1987 | Prüfer<br>MARTIN A E W |
|---|---|---|